(19) Europäisches Patentamt / European Patent Office / Office européen des brevets

(11) **EP 2 909 766 B1**

(12) **EUROPEAN PATENT SPECIFICATION**

(45) Date of publication and mention
of the grant of the patent:
**27.07.2022   Bulletin 2022/30**

(21) Application number: **13847420.0**

(22) Date of filing: **15.10.2013**

(51) International Patent Classification (IPC):
**G01V 1/36** *(2006.01)*        **G01V 1/38** *(2006.01)*

(52) Cooperative Patent Classification (CPC):
**G01V 1/364; G01V 1/38;** G01V 2210/56

(86) International application number:
**PCT/US2013/064909**

(87) International publication number:
**WO 2014/062598 (24.04.2014 Gazette 2014/17)**

(54) **DEGHOSTING SURVEY DATA**

DEGHOSTING VON VERMESSUNGSDATEN

DÉPARASITAGE DE DONNÉES D'ÉTUDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **18.10.2012   US 201261715408 P**

(43) Date of publication of application:
**26.08.2015   Bulletin 2015/35**

(73) Proprietors:
• **Services Pétroliers Schlumberger
75007 Paris (FR)**
Designated Contracting States:
**FR**
• **Geoquest Systems B.V.
2586 BJ  The Hague (NL)**
Designated Contracting States:
**AL AT BE BG CH CY CZ DE DK EE ES FI GB GR
HR HU IE IS IT LI LT LU LV MC MK MT NL NO PL
PT RO RS SE SI SK SM TR**

(72) Inventors:
• **BRACKEN, Stephen Paul
Sugar Land, Texas 77498 (US)**

• **VAN MANEN, Dirk-Jan
Redhill
Surrey RH1 4BZ (GB)**

(74) Representative: **Schlumberger Intellectual
Property Department
Parkstraat 83
2514 JG Den Haag (NL)**

(56) References cited:
**US-A- 4 225 954          US-A1- 2002 118 602
US-A1- 2005 201 203     US-A1- 2006 227 659
US-A1- 2008 259 726     US-A1- 2009 251 992
US-A1- 2011 058 450     US-A1- 2011 110 189
US-A1- 2011 292 762**

• **AMUNDSEN L ET AL: "Rough-sea deghosting of
streamer seismic data using pressure gradient
approximations", GEOPHYSICS, SOCIETY OF
EXPLORATION GEOPHYSICISTS, US, vol. 70, no.
1, 1 January 2005 (2005-01-01), pages V1-V9,
XP002546196, ISSN: 0016-8033, DOI:
10.1190/1.1852892**

**Description**

Background

Survey data can be collected and processed to produce a representation (e.g. image, model, etc.) of a subsurface structure. In some implementations, survey data includes seismic survey data collected using seismic survey equipment. The seismic survey equipment includes one or more seismic sources that are activated to produce seismic wavefields propagated into the subsurface structure. A part of the seismic wavefields is reflected from the subsurface structure and detected by seismic receivers that are part of the survey equipment.

Seismic surveying can be performed in a marine environment. An issue associated with marine seismic surveying is the presence of ghost data. Ghost data refers to data in measured survey data resulting from reflections from an air-water interface of the marine environment. A seismic wavefield generated by a seismic source is propagated generally downwardly into the subsurface structure. A reflected seismic wavefield (that is in response to the seismic wavefield propagated by the seismic source) propagates generally upwardly toward an arrangement of seismic receivers. In the marine environment, where receivers are generally positioned beneath the water surface, the seismic wavefield reflected from the subsurface structure continues to propagate upward past the receivers towards the air-water interface, where the seismic wavefield is reflected back downwardly.

This reflected, generally downwardly traveling seismic wavefield from the air-water interface is detected by the seismic receivers as ghost data, which appears in measured survey data collected by the seismic receivers. The presence of ghost data can result in reduced accuracy when generating a representation of the subsurface structure based on the measured survey data.

US 4225954 refers to an acoustical deverberator for eliminating the reverberation from a sound signal originating within a transient sound source in shallow water, where the sound signal is received by a single hydrophone, and together with the surface and bottom reflection coefficients and known depths of the hydrophone and water, time differences are used to determine corrections which are applied to the received sound signal.

US 2002/0118602 refers to processing data that uses an angle dependent filter from two-component sensor data to attenuate free surface multiples, which includes decomposing recorded dual sensor data into upgoing and downgoing wavefields by combining the recorded pressure at the hydrophone with the vertical particle velocity from the geophone recorded at the ocean floor.

US 2008/0259726 refers to mitigating noise and seismic data by estimating a noise component in a set of multicomponent seismic data representing a recorded wavefield from the relationship at the free surface of an upgoing component and a downgoing component decomposed from the recorded wavefield, and removing the estimated noise component from the seismic data.

Summary

In accordance with the invention there is provided a method and system for deghosting seismic data as claimed in accompanying claims 1 and 6.

In general, based at least in part on a frequency dependent reflection operator, a wavefield propagating in a survey environment is computed, where the reflection operator represents a wavefield reflection from an interface that causes ghost data in survey data measured for a target structure in the survey environment. Deghosted survey data is generated based at least in part on the computed wavefield.

Other or alternative features will become apparent from the following description, from the drawings, and from the claims.

Brief Description Of The Drawings

Some embodiments are described with respect to the following figures.

Figs. 1 and 3 are schematic diagrams of example marine survey arrangements for collecting survey data regarding a subsurface structure.

Fig. 2 is a flow diagram of a deghosting procedure according to some implementations.

Fig. 4 is a block diagram of an example control system according to some implementations.

Detailed Description

In the ensuing discussion, reference is made to performing deghosting according to some implementations in a marine survey environment. Note, however, that techniques or mechanisms according to some implementations can also be applied in land-based survey environments or wellbore-based survey environments in which ghost data can appear in measured survey data measured by one or more survey receivers.

Moreover, although reference is made to performing surveying to characterize a subsurface structure, techniques or mechanisms according to some implementations can also be applied to perform surveys of other structures, such as human tissue, a mechanical structure, plant tissue, animal tissue, a solid volume, a substantially solid volume, a liquid volume, a gas volume, a plasma volume, a volume of space near and/or outside the atmosphere of a planet, asteroid, comet, moon, or other body, and so forth. In addition, the following describes seismic sources and seismic receivers that are part of seismic survey equipment. In other implementations, other types of survey equipment can be used, which can include other types of survey sources and survey receivers.

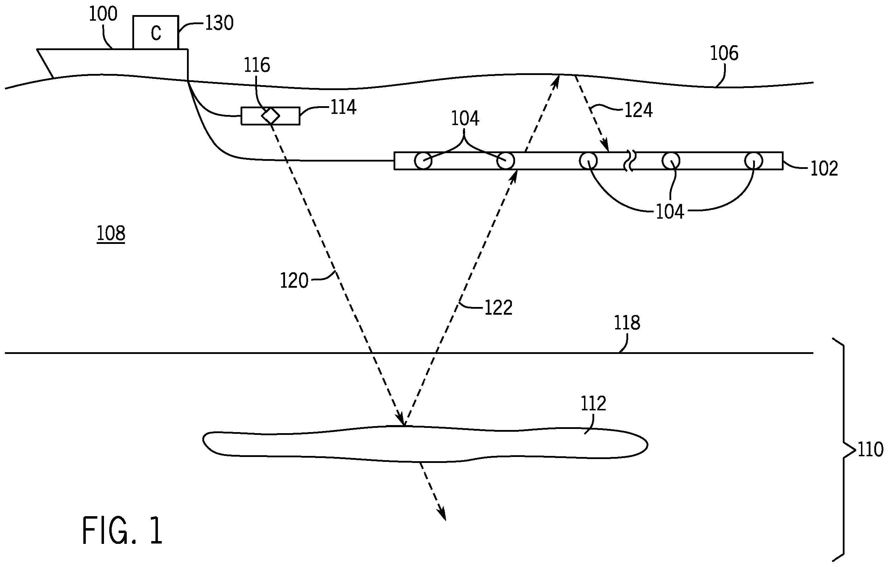

Fig. 1 illustrates an example marine survey arrangement that includes a marine vessel 100 for towing a streamer 102 (or other type of carrier) that includes seismic receivers 104. In addition, the marine vessel 100 (or a different marine vessel) can tow a seismic source assembly 114, which has at least one seismic source 116. Although just one streamer 102 and one seismic source assembly 114 are depicted in Fig. 1, it is noted that there can be more than one streamer and/or more than one seismic source assembly in other examples.

In other examples, instead of towing one or more streamers that carry survey receivers, a water bottom cable (deployed on the water bottom surface 118) can be used, where the water bottom cable carries survey receivers.

In examples according to Fig. 1, the marine vessel 100 tows the streamer 102 and seismic source assembly 114 through a body of water 108 above a water bottom surface 118 (e.g. seafloor). A subsurface structure 110 is located below the bottom surface 118, and the subsurface structure 110 includes at least one subsurface element 112 of interest. Examples of the subsurface element 112 can include a hydrocarbon-bearing reservoir, a freshwater aquifer, a gas injection zone, or other subsurface element of interest.

Fig. 1 further depicts an arrow 120 that represents a seismic wavefield generated by the seismic source 116 and traveling generally downwardly into the subsurface structure 110. A portion of the seismic wavefield 120 is reflected from the subsurface structure 110, and travels generally upwardly (as indicated by arrow 122) toward the streamer 102. The upgoing seismic wavefield (122) is detected by the seismic receivers 104 of the streamer 102.

The upgoing seismic wavefield (122) continues to travel upwardly until the wavefield reaches the air-water interface (106), where the seismic wavefield is reflected generally downwardly (as indicated by arrow 124). The reflected downgoing seismic wavefield (124) is also detected at the seismic receivers 104, which causes ghost data to appear in the measured survey data collected by the seismic receivers 104. The ghost data can constructively and destructively interfere with the upgoing wavefield. This interference is detrimental to the seismic data since it causes amplitude and phase distortions and can result in total elimination of frequencies near the so-called ghost notch frequency.

For simplicity, Fig. 1 depicts an example that includes just one instance of a source downgoing wavefield 120, a reflected upgoing wavefield 122, and a reflected downgoing wavefield 124. In an actual survey environment, there can be many instances of the various downgoing and upgoing wavefields. Also, in other examples including more than one seismic source 116, there can be additional instances of the various wavefields.

Generally, an upgoing wavefield refers to a wavefield that travels in a direction that has at least one directional component that is in the vertical up direction. Similarly, a downgoing wavefield refers to a wavefield that travels in a direction that has at least one directional component that is in the vertical down direction.

Fig. 1 further depicts a control system 130 deployed at the marine vessel 100. The control system 130 can be used to control activation of the seismic source assembly 114. The control system 130 can also receive measurement data (containing measured survey data) collected by the seismic receivers 104. In some examples, the control system 130 is able to process the collected measurement data, such as to develop an image, a model, or other representation of the subsurface structure 110. In other examples, the collected measurement data from the seismic receivers 104 can be communicated to a remote system for further processing.

The processing performed by the control system 130 or by another system can further include deghosting according to some implementations for deghosting measurement data received by the seismic receivers 104. Deghosting measured survey data refers to removing or mitigating an effect of reflection from the air-water interface 106 (or other type of interface).

In the example of Fig. 1, the air-water interface 106 is an interface that reflects wavefields that cause ghost data to be present in survey data measured for a target structure in a survey environment. In other examples, other interfaces can cause ghost data. For example, in a land-based survey arrangement or a wellbore survey arrangement, the ground surface may be the interface that causes ghost data to be present in measured survey data. In other examples in which the target structure being surveyed is a non-subterranean structure, another type of interface can cause presence of ghost data in measured survey data.

In performing deghosting, a reflection operator can be used to simulate reflection of a wavefield from an interface (such as the air-water interface 106 of Fig. 1) that models ghost data present in measured survey data. However, inaccuracies in the reflection operator (or ghost model) can produce artifacts, when performing the deghosting, at frequencies at which signals (such as signals corresponding to a source wavefield produced by a survey source) are not expected to be present or are expected to be very weak. For example, if a ghost notch (*i.e.* almost no energy) is expected at 15 Hertz (Hz), but in reality the ghost notch is present at 20 Hz and hence substantial energy is present at 15 Hz instead of almost no energy, application of an inaccurate inverse of the reflection operator in performing the deghosting may amplify or boost a signal that is much stronger than expected. This can lead to artifacts in data. There may be other reasons that may result in an inaccurate model for the ghost data, as embodied by the reflection operator, which may the cause artifacts upon the application of the deghosting.

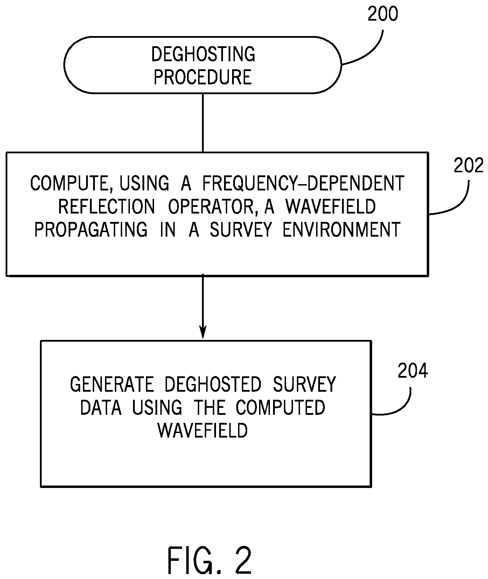

Fig. 2 depicts a deghosting procedure 200, which can be performed by the control system 130 of Fig. 1 or by another system. The deghosting procedure 200 computes (at 202), using a frequency-dependent reflection operator, a wavefield propagating in a survey environment. The frequency-dependent reflection operator represents wavefield reflection from an interface, which is a cause of ghost data in measured survey data. The frequency-dependent reflection operator can specify different amounts of wavefield reflection from the interface at respective different frequencies, such as frequencies of respective different frequency ranges. In the invention, a reflection coefficient of the reflection operator is assigned a first value in a first frequency range, and the reflection coefficient is assigned a different value in a second, different frequency range. The first frequency range can be a frequency range below a specified frequency threshold, for example. The second frequency range can include frequencies greater than the frequencies of the first frequency range. The first frequency range corresponds, for example, to those frequencies at which signals are not present or weak.

The deghosting procedure 200 generates (at 204) deghosted survey data using the computed wavefield. The deghosting removes effects of wavefield reflections from the interface, where the wavefield reflections are represented by the frequency-dependent reflection operator

The following describes details regarding examples relating to generating a downgoing wavefield using a frequency-dependent reflection operator, according to some implementations. Although not expressly specified, the following equations are dependent on frequency.

It is noted that the following provides some examples of determining deghosted survey data using a frequency-dependent reflection operator. In other implementations, other techniques of determining deghosted survey data using a frequency-dependent reflection operator can be used.

A model of upgoing wavefields in a frequency-slowness domain on a flat reference surface at a free surface (e.g. a surface corresponding to locations of survey receivers) is represented as follows:

$$\mathbf{m} = \begin{pmatrix} \widetilde{P}^{up}(p_1) \\ \widetilde{P}^{up}(p_2) \\ \vdots \\ \widetilde{P}^{up}(p_N) \end{pmatrix}, \qquad \text{(Eq. 1)}$$

where

$$p_1 = p_{\min},$$

$$p_N = p_{\max} = p_{\min} + (N-1)\Delta p,$$

$$\Delta p = (p_{\max} - p_{\min})/(N-1).$$

In addition, in Eq. 1, $\widetilde{P}^{up}$ represents an upgoing wavefield. Eq. 1 expresses various upgoing wavefields $\widetilde{P}^{up}$ as functions of different slownesses ($p_1, p_2, ...$). Slowness is the inverse of apparent velocity across an imaginary horizontal receiver array. The parameters $p_{min}$ and $p_{max}$ specify a predefined minimum slowness value and maximum slowness value, respectively. The parameter N represents a number (greater than one) of spectral components, and the parameter $\Delta p$ represents the spectral slowness resolution. $N$ or $\Delta p$ can be chosen to avoid aliasing (wrap-around) in the space domain.

Measured survey data, as measured by survey receivers, is represented as follows:

$$\mathbf{d} = \begin{pmatrix} P^{up+down}(x_1, z_1) \\ P^{up+down}(x_2, z_2) \\ \vdots \\ P^{up+down}(x_M, z_M) \end{pmatrix}, \qquad \text{(Eq. 2)}$$

where $x_1, x_2, ..., x_M$ ($M > 1$) represents survey receiver positions along an inline $x$ direction (*e.g.* direction of tow of a streamer of survey receivers), and $z_1, z_2, ..., z_M$ represent depths of respective receiver depths. In Eq. 2, $P^{up+down}(x_i, z_i)$, where $i = 1$ to $M$, represents a measured wavefield that includes both upgoing and downgoing components at survey receiver $i$ that is located at position $(x_i, z_i)$ along the streamer. The measured survey data represented in Eq. 2 is in the frequency-space domain.

In some examples, the survey receivers of a streamer (*e.g.* the streamer 102 in Fig. 1) are generally provided at the same depth. In such examples, the values of $z_1, z_2, ..., z_M$ are the same. In other words, the measured survey data would be a function of the inline positions (in the x direction), but not of depth (in the $z$ direction).

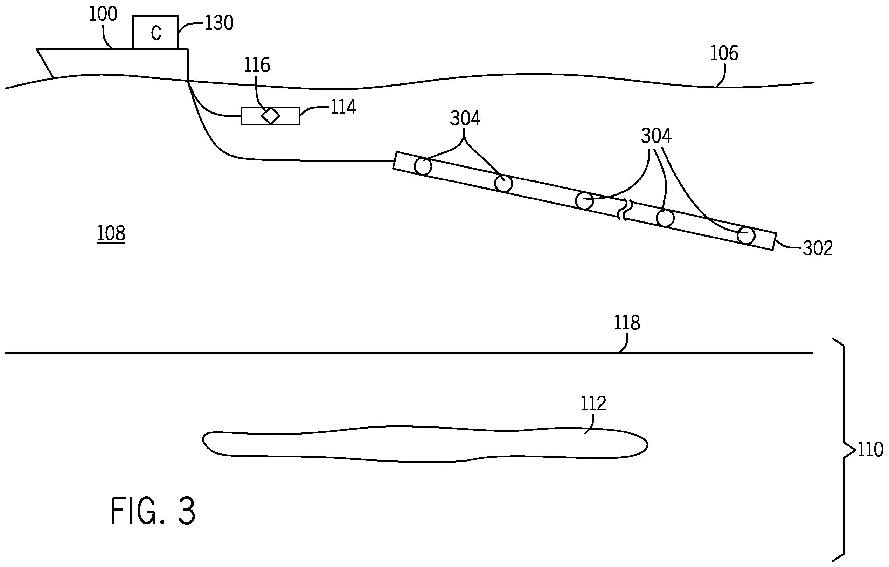

However, in other examples, the streamer can be a slanted (or variable-depth) streamer, such as a streamer 302 depicted in Fig. 3. Survey receivers 304 along the slanted streamer 302 are at different depths. In such examples, the values of $z_1, z_2, ..., z_M$ would be different for respective survey receivers 304 along the slanted streamer 302.

The measured survey data **d** represented by Eq. 2 is known, since the measured survey data is acquired by survey receivers. The upgoing wavefields represented by the model **m** are unknown quantities that are to be derived.

To compute the upgoing wavefields represented by **m**, the following equation is solved:

$$\mathbf{d} = \mathbf{G} \times \mathbf{m}. \qquad \text{(Eq. 3)}$$

In Eq. 3, **G** represents a forward model matrix (or other data structure) having entries with values based on a frequency-dependent reflection operator. Eq. 3 represents a forward model, which is inverted to solve for **m** (the unknown upgoing wavefields). Inversion of the forward model can be based on use of any of various techniques for solving for unknown quantities in a forward model, such as a least-squares technique, a basis pursuit denoise technique, and so forth.

In some examples, **G** represents a mixed-domain forward model matrix expressed as follows:

$$\mathbf{G} = \frac{\omega \Delta p}{2\pi} \begin{pmatrix} \left(e^{-j\omega q(p_1)z_1} - r \cdot e^{j\omega q(p_1)z_1}\right) \cdot e^{j\omega p_1 x_1} & \left(e^{-j\omega q(p_2)z_1} - r \cdot e^{j\omega q(p_2)z_1}\right) \cdot e^{j\omega p_2 x_1} & \cdots & \left(e^{-j\omega q(p_N)z_1} - r \cdot e^{j\omega q(p_N)z_1}\right) \cdot e^{j\omega p_N x_1} \\ \left(e^{-j\omega q(p_1)z_2} - r \cdot e^{j\omega q(p_1)z_2}\right) \cdot e^{j\omega p_1 x_2} & \left(e^{-j\omega q(p_2)z_2} - r \cdot e^{j\omega q(p_2)z_2}\right) \cdot e^{j\omega p_2 x_2} & \cdots & \left(e^{-j\omega q(p_N)z_2} - r \cdot e^{j\omega q(p_N)z_2}\right) \cdot e^{j\omega p_N x_2} \\ \vdots & \vdots & & \vdots \\ \left(e^{-j\omega q(p_1)z_M} - r \cdot e^{j\omega q(p_1)z_M}\right) \cdot e^{j\omega p_1 x_M} & \left(e^{-j\omega q(p_2)z_M} - r \cdot e^{j\omega q(p_2)z_M}\right) \cdot e^{j\omega p_2 x_M} & \cdots & \left(e^{-j\omega q(p_N)z_M} - r \cdot e^{j\omega q(p_N)z_M}\right) \cdot e^{j\omega p_N x_M} \end{pmatrix},$$

(Eq. 4)

The mixed-domain forward model matrix **G** relates the unknown upgoing wavefields, expressed by **m** (Eq. 1), to the known total wavefield data expressed by **d** (Eq. 2) (which includes both upgoing and downgoing wavefields) measured at the survey receivers of the streamer. In Eq. 4, $\omega$ represents frequency and r represents a frequency-dependent reflection operator according to some implementations.

In examples according to Eq. 4, the frequency-dependent operator $r$ is a reflection coefficient representative of reflection from an interface that causes ghost data in measured survey data. The reflection coefficient $r$ is multiplied to each term $e^{j\omega q(p_i)j}$ in Eq. 4, where $q$ (vertical slowness) is represented as $q = q(p) = \sqrt{\dfrac{1}{c^2} - p^2}$, and c represents the velocity of sound in the medium (*e.g.* water) in which the wavefield propagates.

In other implementations, the reflection coefficient $r$ in Eq. 4 can be used as a multiplier of other terms in Eq. 4.

The foregoing examples employ a space-slowness formulation. In further examples, a space-wavenumber formulation (instead of the formulation expressed in terms of slowness and space set forth above) can be obtained in similar fashion, if the following relationships are provided:

$$k_x = \omega p,$$

and

$$k_z = k_z(k_x) = \sqrt{\frac{\omega^2}{c^2} - k_x^2} = \omega q.$$

A wavenumber is a spatial frequency of a wavefield. With the space-wavenumber formulation, the deghosted survey data is calculated as a function of wavenumbers.

In some examples, to reduce low-frequency artifacts due to deghosting, the reflection coefficient $r$ for low frequencies (below a predefined frequency threshold) can be set to a low value, such as zero or some other low value. Although reference is made to an example relating to low-frequency artifacts, note that the frequency-dependent reflection coefficient $r$ can be used to reduce deghosting artifacts at other frequencies.

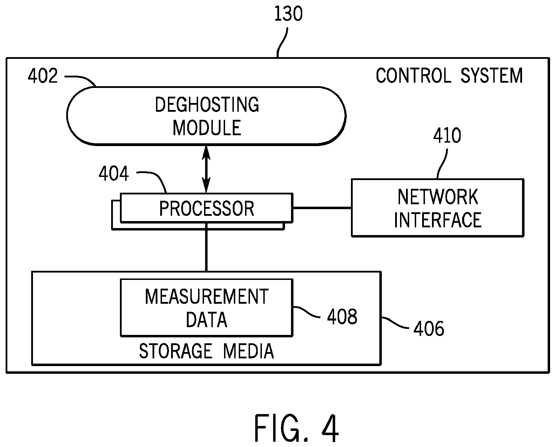

Fig. 4 illustrates an example control system 130 according to some implementations. The control system 130 includes a deghosting module 402, which can be implemented as machine-readable instructions executable on one or multiple processors 404. The deghosting module 402 can perform tasks as discussed above, such as those of Fig. 2. The control system 130 can be implemented with a computer system, or with a distributed arrangement of computer systems. A processor can include a microprocessor, microcontroller system, processor module or subsystem, programmable integrated circuit, programmable gate array, or another control or computing device.

The processor(s) 404 is (are) connected to a storage medium (or storage media) 406, which can store measurement data 408 collected by the survey receivers. The control system 130 also includes a network interface 410 to allow the control system 130 to communicate with another system, such as with the streamer 102 to collect the measurement data, or with another system that communicates the measurement data to the control system 130.

The storage medium (or storage media) 406 can be implemented as one or more computer-readable or machine-readable storage media. The storage media include different forms of memory including semiconductor memory devices such as dynamic or static random access memories (DRAMs or SRAMs), erasable and programmable read-only memories (EPROMs), electrically erasable and programmable read-only memories (EEPROMs) and flash memories; magnetic disks such as fixed, floppy and removable disks; other magnetic media including tape; optical media such as compact disks (CDs) or digital video disks (DVDs); or other types of storage devices. Note that the instructions discussed above can be provided on one computer-readable or machine-readable storage medium, or alternatively, can be provided on multiple computer-readable or machine-readable storage media distributed in a large system having possibly plural nodes. Such computer-readable or machine-readable storage medium or media is (are) considered to be part of an article (or article of manufacture). An article or article of manufacture can refer to any manufactured single component or multiple components. The storage medium or media can be located either in the machine running the machine-readable instructions, or located at a remote site from which machine-readable instructions can be downloaded over a network for execution.

In general, based at least in part on a frequency dependent reflection operator, a wavefield propagating in a survey environment is computed, where the reflection operator represents a wavefield reflection from an interface that causes ghost data in survey data measured for a target structure in the survey environment. Deghosted survey data is generated based at least in part on the computed wavefield.

In all implementations, the reflection operator specifies a first amount of wavefield reflection from the interface in a first frequency range, and a second, different amount of wavefield reflection from the interface in a second, different frequency range.

In general, according to further or other implementations, the reflection operator comprises a frequency-dependent reflection coefficient with values that vary with frequency.

In general, according to further or other implementations, a forward model that includes the frequency-dependent reflection coefficient is provided.

In general, according to further or other implementations, computing the wavefield comprises solving for an upgoing wavefield using the forward model.

In general, according to further or other implementations, solving for the upgoing wavefield comprises inverting the forward model that is based at least in part on a forward model matrix and the measured survey data, the forward model matrix containing values computed using the frequency-dependent coefficient.

In general, according to further or other implementations, computing the wavefield comprises computing an upgoing wavefield.

In general, according to further or other implementations, computing the wavefield comprises computing a plurality of wavefields at different slownesses or different wavenumbers.

In general, according to some implementations, a system includes a storage medium to store measured survey data, and at least one processor configured to deghost the measured survey data by removing an effect of a wavefield reflected from an interface that causes ghost data in the measured survey data, where the deghosting of the measured survey data uses a frequency-dependent reflection operator that represents different amounts of wavefield reflections at corresponding frequencies from the interface.

In general, according to further or other implementations, the deghosting employs a model that is based at least in part on values computed using the frequency-dependent reflection operator.

In general, according to further or other implementations, the model includes the measured survey data and a data structure having the values.

In general, according to further or other implementations, the values are further dependent upon positions of survey receivers that acquired the measured survey data.

In general, according to further or other implementations, the frequency-dependent reflection operator reduces wavefield reflection in at least one frequency range.

In general, according to further or other implementations, the at least one frequency range includes frequencies below a predefined frequency threshold.

In general, according to further or other implementations, the deghosted survey data includes upgoing wavefields.

In general, according to some implementations, an article comprises at least one machine-readable storage medium storing instructions that upon execution cause a system to deghost measured survey data relating to a target structure by removing an effect of a wavefield reflected from an interface that causes ghost data in the measured survey data, where the deghosting of the measured survey data uses a frequency-dependent reflection operator that represents different wavefield reflections at corresponding frequencies from the intcrfacc.

In general, according to further or other implementations, the instructions upon execution cause the system to further receive the measured survey data acquired by survey receivers.

In general, according to further or other implementations, the measured survey data is from the survey receivers that include seismic receivers.

In general, according to further or other implementations, the measured survey data is from the survey receivers arranged on a carrier in marine survey environment.

In the foregoing description, numerous details are set forth to provide an understanding of the subject disclosed herein. However, implementations may be practiced without some of these details. Accordingly, implementations may include modifications and variations within the scope of the invention, as defined by the appended claims.

**Claims**

1. A seismic deghosting method (200), comprising:

    - computing, using a model based at least in part on values computed using a frequency dependent reflection operator ($r$), a wavefield (120,122, 124, m) propagating in a seismic survey environment (202), wherein

        - the reflection operator (r) represents a wavefield reflection (124) from an interface (106) that causes ghost data in measured survey data for a target structure in the seismic survey environment, and
        - the values are further dependent on depths of seismic survey receivers (104) that acquired measured seismic survey data (d); and

    - generating deghosted survey data (204) based at least in part on the computed wavefield (120,122);

    **characterized in that**: the reflection operator ($r$) specifies:

        - a first amount of wavefield reflection (124) from the interface (106) in a first frequency range, and
        - a second, different amount of wavefield reflection (124) from the interface (106) in a second, different frequency range.

2. The method of claim 1, wherein the reflection operator ($r$) comprises a frequency-dependent reflection coefficient ($r$) with values that vary with frequency.

3. The method of claim 2, wherein the model is a mixed domain forward model matrix (G) that includes the frequency-dependent reflection coefficient ($r$).

4. The method of claim 3, wherein solving for the upgoing wavefields (122, m) comprises inverting the forward model that is based at least in part on the mixed domain forward model matrix (G) and the measured survey data (d), the mixed domain forward model matrix (G) containing the values computed using the frequency-dependent reflection coefficient (*r*) and relating a plurality of unknown upgoing wavefields (122, m) to the known total wavefield data (d), which include both upgoing and downgoing wavefields (120,122,124) measured at the survey receivers (104).

5. The method of claim 1, wherein computing the wavefield (120,122, m) comprises computing a plurality of upgoing wavefields (122, m) at different slownesses (*q*) or different wavenumbers.

6. A seismic deghosting system (130) comprising:

a storage medium (406) to store measured seismic survey data; and
at least one processor (404) configured to:

deghost the measured seismic survey data (d) by removing an effect of a wavefield (120, 122) reflected from an interface that causes ghost data in the measured seismic survey data (d),
wherein the deghosting of the measured seismic survey data (d) employs a model that is based at least in part on values computed using a frequency-dependent reflection operator (*r*) that represents different amounts of wavefield reflections at corresponding frequencies from the interface (106), wherein the values are further dependent upon depths of seismic survey receivers (104) that acquired the measured seismic survey data (d);
**characterized in that**:
the reflection operator (*r*) specifies:

- a first amount of wavefield reflection (124) from the interface (106) in a first frequency range, and
- a second, different amount of wavefield reflection (124) from the interface (106) in a second, different frequency range.

7. The system of claim 6, wherein the model includes the measured survey data (d) and a data structure having the values.

8. The system of claim 6, wherein the deghosted seismic survey data include upgoing wavefields (122, m).

9. An article comprising at least one machine-readable storage medium storing instructions that upon execution cause the seismic deghosting system according to any of claims 6-8 to perform the method according to any of claims 1-5.

**Patentansprüche**

1. Seismisches Deghosting-Verfahren (200), das umfasst:

- Berechnen eines sich in einem seismischen Erkundungsbereich (202) ausbreitenden Wellenfelds (120, 122, 124, m) unter Verwendung eines Modells, das wenigstens teilweise auf unter Verwendung eines frequenzabhängigen Reflexionsoperators (*r*) berechneten Werten basiert, wobei
- der Reflexionsoperator (*r*) eine Wellenfeldreflexion (124) von einer Grenzfläche (106) darstellt, die in gemessenen Erkundungsdaten für eine Zielstruktur im seismischen Erkundungsbereich Ghost-Daten verursacht, und
- die Werte ferner von Tiefen seismischer Erkundungsempfänger (104) abhängig sind, die die gemessenen seismischen Erkundungsdaten (d) erfasst haben; und
- Erzeugen von deghosteten Erkundungsdaten (204), wenigstens teilweise basierend auf dem berechneten Wellenfeld (120, 122);

**dadurch gekennzeichnet, dass**: der Reflexionsoperator (*r*) spezifiziert:

- einen ersten Betrag an Wellenfeldreflexion (124) von der Grenzfläche (106) in einem ersten Frequenzbereich, und
- einen zweiten, anderen Betrag an Wellenfeldreflexion (124) von der Grenzfläche (106) in einem zweiten, anderen Frequenzbereich.

2. Verfahren nach Anspruch 1, wobei der Reflexionsoperator (*r*) einen frequenzabhängigen Reflexionskoeffizienten (*r*) mit Werten umfasst, die mit der Frequenz variieren.

3. Verfahren nach Anspruch 2, wobei das Modell eine Mischbereich-Vorwärtsmodellmatrix (G) ist, die den frequenzabhängigen Reflexionskoeffizienten (*r*) umfasst.

4. Verfahren nach Anspruch 3, wobei das Auflösen nach den herauflaufenden Wellenfeldern (122, m) umfasst, das Vorwärtsmodell, das wenigstens teilweise auf der Mischbereich-Vorwärtsmodellmatrix (G) und den gemessenen Erkundungsdaten (d) basiert, zu invertieren, wobei die Mischbereich-Vorwärtsmodellmatrix (G) die unter Verwendung des frequenzabhängigen Reflexionskoeffizienten (*r*) berechneten Werte enthält und mehrere unbekannte herauflaufende Wellenfelder (122, m) zu den bekannten Gesamtwellenfelddaten (d), die sowohl herauflaufende als auch herablaufende an den Erkundungsempfängern (104) gemessene Wellenfelder (120, 122, 124) umfassen, in Beziehung setzt.

5. Verfahren nach Anspruch 1, wobei das Berechnen des Wellenfelds (120, 122, m) umfasst, mehrere herauflaufende Wellenfelder (122, m) mit verschiedenen Langsamkeiten (*q*) oder verschiedenen Wellenzahlen zu berechnen.

6. Seismisches Deghosting-System (130), das umfasst:

   ein Speichermedium (406), um gemessene seismische Erkundungsdaten zu speichern; und
   wenigstens einen Prozessor (404), der dazu ausgelegt ist:
   die gemessenen seismischen Erkundungsdaten (d) durch Entfernen eines Effekts eines von einer Grenzfläche reflektierten Wellenfelds (120, 122), der in den gemessenen seismischen Erkundungsdaten (d) Ghost-Daten verursacht, zu deghosten, wobei das Deghosten der gemessenen seismischen Erkundungsdaten (d) ein Modell verwendet, das wenigstens teilweise auf unter Verwendung eines frequenzabhängigen Reflexionsoperators (*r*), der verschiedene Beträge von Wellenfeldreflexionen bei entsprechenden Frequenzen von der Grenzfläche (106) darstellt, berechneten Werten basiert, wobei die Werte ferner von Tiefen seismischer Erkundungsempfänger (104) abhängig sind, die die gemessenen seismischen Erkundungsdaten (d) erfasst haben;
   **dadurch gekennzeichnet, dass**:
   der Reflexionsoperator (*r*) spezifiziert:

   - einen ersten Betrag an Wellenfeldreflexion (124) von der Grenzfläche (106) in einem ersten Frequenzbereich, und
   - einen zweiten, anderen Betrag an Wellenfeldreflexion (124) von der Grenzfläche (106) in einem zweiten, anderen Frequenzbereich.

7. System nach Anspruch 6, wobei das Modell die gemessenen Erkundungsdaten (d) und eine die Werte aufweisende Datenstruktur umfasst.

8. System nach Anspruch 6, wobei die deghosteten seismischen Erkundungsdaten herauflaufende Wellenfelder (122, m) umfassen.

9. Artikel, der wenigstens ein maschinenlesbares Speichermedium umfasst, das Anweisungen speichert, die bei deren Ausführung bewirken, dass das seismische Deghosting-System gemäß einem der Ansprüche 6-8 das Verfahren nach einem der Ansprüche 1-5 ausführt.

**Revendications**

1. Procédé de déparasitage sismique (200), comprenant :

   - le calcul, à l'aide d'un modèle basé au moins en partie sur des valeurs calculées à l'aide d'un opérateur de réflexion dépendant de la fréquence (r), d'un champ d'ondes (120, 122, 124, m) se propageant dans un environnement de relevé sismique (202) dans lequel
   - l'opérateur de réflexion (r) représente une réflexion du champ d'ondes (124) à partir d'une interface (106) qui provoque des données fantômes dans les données de relevé mesurées pour une structure cible dans l'environnement de relevé sismique, et
   - les valeurs dépendent en outre des profondeurs des récepteurs de relevé sismique (104) qui ont acquis des données de relevé sismique mesurées (d) ; et
   - la génération des données de relevé déparasitées (204) basées au moins en partie sur le champ d'ondes calculé (120, 122) ;

**caractérisé en ce que** : l'opérateur de réflexion (r) spécifie :

- une première quantité de réflexion du champ d'ondes (124) à partir de l'interface (106) dans une première gamme de fréquences, et
- une seconde quantité différente de réflexion du champ d'ondes (124) à partir de l'interface (106) dans une seconde gamme de fréquences différente.

2. Procédé selon la revendication 1, dans lequel l'opérateur de réflexion (r) comprend un coefficient de réflexion dépendant de la fréquence (r) comportant des valeurs qui varient avec la fréquence.

3. Procédé selon la revendication 2, dans lequel le modèle est une matrice du modèle direct de domaine mixte (G) qui comporte le coefficient de réflexion dépendant de la fréquence (r).

4. Procédé selon la revendication 3, dans lequel la résolution des champs d'ondes ascendants (122, m) comprend l'inversion du modèle direct qui est basé au moins en partie sur la matrice du modèle direct de domaine mixte (G) et les données de relevé mesurées (d), la matrice du modèle direct de domaine mixte (G) contenant les valeurs calculées à l'aide du coefficient de réflexion dépendant de la fréquence (r) et reliant une pluralité de champs d'ondes ascendants inconnus (122, m) aux données de champ d'ondes totales connues (d), qui comportent à la fois des champs d'ondes ascendants et descendants (120, 122, 124) mesurés au niveau des récepteurs de relevé (104).

5. Procédé selon la revendication 1, dans lequel le calcul du champ d'ondes (120, 122, m) comprend le calcul d'une pluralité de champs d'ondes ascendants (122, m) à différentes lenteurs (q) ou différents nombres d'ondes.

6. Système de déparasitage sismique (130) comprenant :

un support de stockage (406) pour stocker les données de relevé sismique mesurées et au moins un processeur (404) configuré pour :
déparasiter les données de relevé sismique mesurées (d) en supprimant un effet d'un champ d'ondes (120, 122) réfléchi à partir d'une interface qui provoque des données fantômes dans les données de relevé sismique mesurées (d), dans lequel le déparasitage des données de relevé sismique mesurées (d) emploie un modèle qui est basé au moins en partie sur des valeurs calculées à l'aide d'un opérateur de réflexion dépendant de la fréquence (r) qui représente différentes quantités de réflexions de champ d'ondes à des fréquences correspondantes à partir de l'interface (106), dans lequel les valeurs dépendent en outre des profondeurs des récepteurs de relevé sismique (104) qui ont acquis les données de relevé sismique mesurées (d) ;
**caractérisé en ce que** :
l'opérateur de réflexion (r) spécifie :

- une première quantité de réflexion du champ d'ondes (124) à partir de l'interface (106) dans une première gamme de fréquences, et
- une seconde quantité différente de réflexion du champ d'ondes (124) à partir de l'interface (106) dans une seconde gamme de fréquences différente.

7. Système selon la revendication 6, dans lequel le modèle comporte les données de relevé mesurées (d) et une structure de données présentant les valeurs.

8. Système selon la revendication 6, dans lequel les données de relevé sismique déparasitées comportent des champs d'ondes ascendants (122, m).

9. Article comprenant au moins un support de stockage lisible par machine stockant des instructions qui, lors de leur exécution, amènent le système de déparasitage sismique selon l'une quelconque des revendications 6 à 8 à effectuer le procédé selon l'une quelconque des revendications 1 à 5.

FIG. 1

FIG. 2

FIG. 3

EP 2 909 766 B1

CONTROL SYSTEM

402 — DEGHOSTING
MODULE

410

404 —

PROCESSOR — NETWORK
INTERFACE

MEASUREMENT
DATA — 408 — 406
STORAGE MEDIA

FIG. 4

**EP 2 909 766 B1**

**REFERENCES CITED IN THE DESCRIPTION**

**Patent documents cited in the description**

- US 4225954 A
- US 20020118602 A
- US 20080259726 A